(19) **Europäisches Patentamt / European Patent Office / Office européen des brevets**

(11) **EP 1 974 455 B1**

(12) **FASCICULE DE BREVET EUROPEEN**

(45) Date de publication et mention de la délivrance du brevet:
**15.08.2012 Bulletin 2012/33**

(21) Numéro de dépôt: **07717995.0**

(22) Date de dépôt: **17.01.2007**

(51) Int Cl.:
***H02P 6/14*** *(2006.01)*

(86) Numéro de dépôt international:
**PCT/FR2007/050659**

(87) Numéro de publication internationale:
**WO 2007/083062 (26.07.2007 Gazette 2007/30)**

(54) **DISPOSITIF DE PILOTAGE D'UNE MACHINE TOURNANTE POLYPHASEE**

VORRICHTUNG ZUR STEUERUNG EINER POLYPHASEN-ROTATIONSMASCHINE

DEVICE FOR CONTROLLING A POLYPHASE ROTATING MACHINE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **20.01.2006 FR 0600533**

(43) Date de publication de la demande:
**01.10.2008 Bulletin 2008/40**

(73) Titulaire: **VALEO EQUIPEMENTS ELECTRIQUES MOTEUR**
**94046 Créteil Cedex (FR)**

(72) Inventeurs:
• **MASFARAUD, Julien**
**75010 Paris (FR)**
• **DOFFIN, Hugues**
**94000 Creteil (FR)**
• **BOUDJEMAI, Farouk**
**91460 Marcoussis (FR)**

(56) Documents cités:
**US-A- 3 999 108     US-A- 4 271 385**
**US-A- 5 838 123     US-A- 6 002 234**

EP 1 974 455 B1

**Description**

Domaine de l'invention

L'invention concerne un dispositif de pilotage d'une machine électrique tournante polyphasée, éventuellement réversible comme dans le cas des alternateurs-démarreurs.

Etat de la technique

Une machine électrique tournante comprend classiquement un rotor et un stator. L'un de ces.éléments est parcouru par un courant continu et génère ainsi un champ magnétique constant et d'orientation fixe par rapport à cet élément. L'autre élément comprend une pluralité d'enroulements distincts et espacés angulairement ; chaque enroulement est parcouru par un courant déphasé par rapport à celui des autres enroulements de manière à créer un champ magnétique tournant. La coexistence du champ d'orientation fixe du premier élément et du champ tournant du second élément entraînent la rotation de ces éléments l'un par rapport à l'autre, c'est-à-dire la rotation du rotor par rapport au stator.

Les différents courants sont généralement injectés dans les enroulements de l'élément polyphasé à travers un pont formé par des interrupteurs de puissance (en général des diodes associées à des transistors de puissance).

Ce pont de puissance est en général piloté par un module électronique qui fixe les instants d'ouverture et de fermeture des interrupteurs et commande ainsi la phase des différents courants à travers les enroulements.

Afin de déterminer les instants de commande des interrupteurs, le module électronique utilise couramment des signaux représentatifs de la position du rotor par rapport au stator, tel que par exemple des capteurs de position régulièrement répartis sur la circonférence de la machine tournante, lesdits capteurs envoyant chacun par exemple des signaux périodiques dépendant de la fréquence de rotation du rotor et déphasés l'un par rapport à l'autre.

Dans le cas où la machine électrique tournante est réversible, le pont de puissance joue le rôle d'un pont redresseur lors du fonctionnement en mode alternateur de la machine.

Dans le but de s'approcher d'un couple optimal sur une plage importante de vitesses de rotation, le document WO 2004/100351 propose de traiter les signaux issus des capteurs par pondération et sommation, en pratique au moyen d'un circuit analogique de filtrage composé de condensateurs et de résistances, ce qui permet de réaliser des décalages de phase continûment variables sur toute la plage des vitesses de rotation.

Toutefois, selon cette solution, le décalage de phase est déterminé en fonction de la vitesse par les composants du circuit analogique. La relation décalage-vitesse est donc figée et ne peut donc pas notamment être adaptée aux différentes situations qui peuvent être rencontrées (démarrage, assistance dynamique, ...). De plus, le choix de cette relation manque de flexibilité puisqu'elle est déterminée en fonction des éléments de circuit utilisés et donc est peu adaptable à d'autres machines électriques, par exemple de dimensionnements différents. Cette conception implique, en outre, l'utilisation d'un circuit analogique avec des caractéristiques propres pour chaque type de machine que l'on souhaite fabriquer, ce qui complique la fabrication des machines à un niveau industriel.

Les documents US4271385 et US5838123 divulguent des dispositifs de pilotage selon l'état de la technique

Objet de l'invention

Pour éviter ces problèmes et permettre ainsi notamment une plus grande flexibilité dans le décalage de phase des signaux issus des capteurs, l'invention propose un dispositif de pilotage d'une machine électrique tournante polyphasée, ladite machine comprenant un stator, un rotor, et des capteurs, ledit dispositif étant apte à recevoir :

- au moins un premier signal capteur représentatif d'une position du rotor par rapport au stator et délivré par un premier capteur, et
- un second signal capteur représentatif de ladite position et déphasé par rapport au premier signal, ledit second signal étant délivré par un second capteur.

Conformément à l'invention, le dispositif de pilotage comporte :

- des moyens pour combiner le premier et le second signal capteur en un signal combiné, lesdits moyens comprenant au moins un élément de commutation piloté avec un rapport cyclique variable, le signal combiné étant fonction dudit rapport cyclique et permettant de piloter ladite machine.

Le décalage de phase du signal combiné est ainsi déterminé par le rapport cyclique des moyens de commutation, ce qui permet de commander ce décalage de manière flexible dans une gamme importante.

Selon des modes de réalisation non limitatifs, le dispositif selon l'invention peut comporter une ou plusieurs des caractéristiques suivantes :

Un filtre passe-bas peut être introduit de manière à filtrer le signal combiné, ce qui permet d'obtenir un signal filtré avec une forme classique, en général sinusoïdale.

Le filtre passe-bas a de préférence une fréquence de coupure inférieure à la fréquence de transmission des moyens de commutation ; on élimine ainsi du signal filtré les harmoniques indésirables générées par la commutation. Ladite fréquence de coupure est par exemple comprise entre 1 kHz et 100 kHz, ce qui permet de ne pas influencer les fréquences utiles inférieures à 1kHz tout en commutant les moyens de commutation à une fréquence raisonnable.

Les moyens de combinaison comprennent en outre des moyens de pondération des signaux capteurs. Les moyens de pondération peuvent comprendre au moins une résistance destinée à recevoir en entrée un signal capteur.

En outre, les moyens de combinaison comprennent deux éléments de commutation destinés à recevoir un signal capteur.

Dans un premier mode de réalisation, un premier élément de commutation est destiné à commuter à l'inverse du deuxième élément de commutation.

Dans un deuxième mode, un deuxième élément de commutation est destiné à être piloté au moyen d'un second rapport cyclique.

Dans une mise en oeuvre pratique où l'on utilise un troisième capteur de position, les moyens de combinaison sont aptes à combiner un troisième signal capteur avec les premier et second signaux capteurs.

Dans un premier mode de réalisation, un élément de commutation est un interrupteur simple.

Dans un deuxième mode de réalisation, un élément de commutation est un interrupteur biposition.

Par ailleurs, le dispositif est apte à recevoir en entrée un nombre de signaux capteurs égal au nombre de phases de la machine.

Selon un mode de réalisation envisagé, le dispositif de pilotage coopère avec un circuit de commande d'un pont de puissance, ledit circuit de commande étant apte à recevoir les signaux capteurs.

Selon un mode de réalisation envisagé, le dispositif de pilotage coopère avec un circuit de commande d'un pont de puissance, ledit circuit de commande étant apte à recevoir un signal combiné filtré.

Selon un mode de réalisation pratique, un circuit de commande comporte un microprocesseur apte à commander le rapport cyclique d'un élément de commutation.

Dans ce cas, on peut également prévoir que le microprocesseur est apte à déterminer le rapport cyclique en fonction d'une information représentative de la vitesse de rotation de la machine, ce qui permet de commander par des moyens pratiques le décalage des signaux capteurs en fonction de la vitesse de rotation.

L'invention propose également une machine électrique tournante polyphasée telle qu'un alternateur-démarreur, qui comprend un circuit de commande construit comme évoqué ci-dessus.

Brève description des Figures

D'autres caractéristiques et avantages de l'invention apparaîtront à la lumière de la description qui suit, faits en référence aux dessins annexés dans lesquels :

- la figure 1 représente les éléments d'une machine électrique tournante polyphasée et sa commande, la commande comportant un bloc d'avance de phase;
- la figure 2 représente un mode de réalisation non limitatif du bloc d'avance de phase de la figure 1, le bloc d'avance de phase comprenant un circuit mélangeur ;
- les figures 3 et 4 représentent des modes possibles de réalisation non limitatifs d'un circuit mélangeur de la figure 2 ;
- la figure 5 représente une variante de réalisation du circuit mélangeur.
- la figure 6 représente une autre variante de réalisation du circuit mélangeur de la figure 2.

Description détaillée de modes de réalisation non limitatifs de l'invention

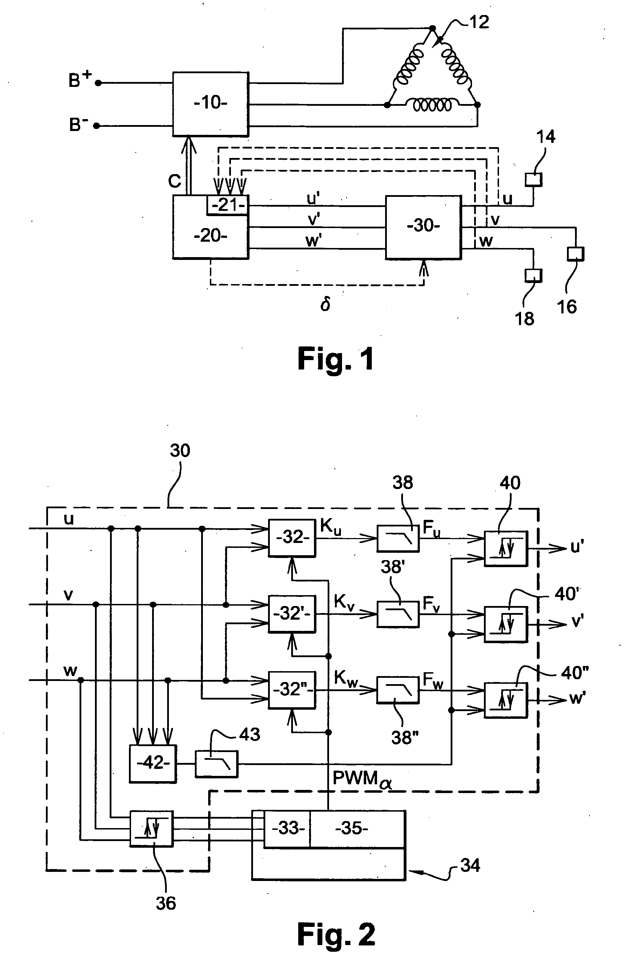

La figure 1 représente les éléments principaux d'une machine électrique tournante polyphasée, par exemple réversible du type alternateur-démarreur, ainsi que sa commande. La figure 1 présente un exemple non limitatif d'une machine électrique tournante triphasée avec trois capteurs de position.

Une telle commande comprend un pont de puissance 10 qui, en mode moteur, alimente les phases d'un stator 12, dans cet exemple non limitatif trois phases, à partir d'une tension générée entre les deux bornes B⁺, B⁻ d'une batterie d'alimentation.

Le pont de puissance 10 est formé d'interrupteurs (non représentés) qui sont commandés par des signaux de commande C de sorte que les différents enroulements du stator 12 soient parcourus par des signaux décalés de 120° l'un par rapport à l'autre dans cet exemple.

Dans cet exemple non limitatif, il existe trois capteurs. Les trois capteurs linéaires 14, 16, 18 sont de manière non limitative équirépartis sur 360° électriques et génèrent des signaux capteurs U, V, W. Ces signaux sont traités par un dispositif de pilotage appelé bloc d'avance de phase 30 qui délivre trois signaux numériques U', V', W' correspondant aux signaux capteurs U, V, W avec une avance de phase δ par rapport à ceux-ci.

Les signaux numériques U', V', W' générés par le bloc d'avance de phase 30 sont utilisés par un circuit de commande 20 pour former les signaux de commande C du pont de puissance 10.

Le circuit de commande 20 génère par ailleurs une consigne d'avance de phase δ. Pour ce faire, le circuit de commande comprend par exemple un microcontrôleur (incluant un microprocesseur) qui détermine la vitesse de rotation de la machine sur la base des signaux capteur U, V, W ou sur la base des signaux numériques U', V', W' et qui en déduit le décalage de phase δ à utiliser, éventuellement également fonction d'autres conditions, tel que la phase de fonctionnement de la machine (exemple mode moteur, transition mode moteur-mode générateur). Dans cet exemple non limitatif, la valeur de décalage δ est donc associée à une vitesse et condition de fonctionnement données et est par exemple mémorisé au sein du microcontrôleur dans une table de correspondance. A cet effet, le circuit de commande comporte un étage d'entrée 21 apte à recevoir les signaux capteurs U, V, W ou les signaux numériques U', V', W'.

Lorsque la machine fonctionne en mode alternateur appelé également mode générateur, le pont de puissance 10 joue le rôle d'un pont redresseur qui assure la transmission de l'énergie de la machine (et notamment du stator 12) à la batterie (borne B$^+$, B$^-$).

La figure 2 représente un premier mode de réalisation non limitatif envisageable pour le bloc d'avance de phase 30.

Dans ce mode de réalisation, chaque signal capteur U, V, W issu d'un capteur 14, 16, 18 est appliqué à une première entrée d'un circuit dit "*mélangeur*" respectivement 32, 32', 32" dont des exemples de réalisation seront donnés dans la suite.

Chaque circuit mélangeur 32, 32', 32" reçoit également sur une seconde entrée un autre signal capteur V, W, U issu d'un capteur et ayant une avance de phase de 120° par rapport au signal capteur U, V, W reçu sur sa première entrée.

Ainsi, chaque circuit mélangeur 32, 32', 32" reçoit sur sa première entrée l'un des signaux capteurs U, V, W et sur sa seconde entrée le signal capteur V, W, U en avance de phase de 120° par rapport à celui reçu sur la première entrée.

Chaque circuit mélangeur 32, 32', 32" reçoit également un signal de commande PWM$_\alpha$ formé d'impulsions avec un rapport cyclique α variable, ce signal de commande étant donc un signal en modulation de largeur d'impulsion appelé également MLI. Le signal de commande PWM$_\alpha$ commande la commutation d'éléments de commutation des circuits mélangeurs 32, 32', 32" comme décrit plus bas.

Dans le mode de réalisation représenté en figure 2, le même signal de commande PWM$_\alpha$ est appliqué à l'ensemble des trois mélangeurs 32, 32', 32". En variante, on pourrait naturellement prévoir des signaux de commande spécifiques pour chaque circuit mélangeur.

Dans le mode de réalisation représenté en figure 2, le signal de commande PWM$_\alpha$ est généré sur une broche d'un microprocesseur 34 dont une partie 35 est dédiée à la génération de ce signal de commande PWM$_\alpha$ (par partie, on entend ici une partie du logiciel qui commande le microprocesseur 34 ; en variante, on pourrait envisager la réalisation de la même fonction en logique câblée).

Comme visible en figure 2, le microprocesseur 34 reçoit également les signaux U, V, W issus des capteurs 14, 16, 18 à travers un premier comparateur à hystérésis 36 qui permet de les transformer en signaux tout ou rien. Les signaux ainsi reçus sont destinés à une partie 33 du microprocesseur 34 dédiée à la détermination de la vitesse de la machine tournante comme décrit plus haut. En variante, on peut également utiliser les signaux U', V', W' comme décrit plus haut afin de déterminer la vitesse comme décrit plus haut.

L'information de vitesse de rotation ainsi déterminée est notamment utilisée dans le microprocesseur 34 pour déterminer l'avance de phase à réaliser par le bloc d'avance de phase 30. A partir de cette avance de phase, le microprocesseur 34 détermine le rapport cyclique α du signal PWM$_\alpha$ à appliquer au circuit mélangeur 32, 32', 32".

La relation entre la vitesse déterminée par la partie de détermination de la vitesse 33 et le rapport cyclique α (soit directement, soit par l'intermédiaire du décalage de phase δ) est par exemple mémorisé dans une mémoire associée au microprocesseur 34 sous forme d'une table de correspondance.

Le décalage de phase δ souhaité (et par conséquent le rapport cyclique α utilisé) peut naturellement dépendre d'autres paramètres que la vitesse de rotation de la machine tournante, tel que par exemple le mode de fonctionnement de la machine tournante (exemple mode moteur (phase démarrage ou assistance dynamique à haute vitesse), transition mode moteur-mode générateur) ou encore consigne de couple. On peut dans ce cas prévoir plusieurs tables de correspondances comme évoquées ci-dessus, chaque table étant utilisé dans un mode spécifique de fonctionnement de la machine tournante.

Comme on le verra dans la suite au vu des exemples de réalisation des circuits mélangeurs 32, 32', 32", ces derniers forment deux types de combinaison différents des signaux qu'ils reçoivent en entrée selon que le signal de commande PWM$_\alpha$ est de niveau haut ou de niveau bas. (On entend ici éventuellement par combinaison, une combinaison dans laquelle l'un des deux signaux est à poids nul, c'est-à-dire que seul l'autre signal transmis.)

L'alternance des deux types de combinaison (dont le résultat sont les signaux Ku, $K_V$, $K_W$) est émise en sortie de chaque circuit mélangeur 32, 32', 32" à destination d'un filtre passe-bas dont la fréquence de coupure est inférieure à la fréquence du signal de commande $PWM_\alpha$ (c'est-à-dire à la fréquence d'alternance des deux types de combinaison) de telle sorte que le signal filtré forme à chaque instant la moyenne des combinaisons des deux types, ladite moyenne étant pondérée par la durée de chacune des combinaisons et dépendant naturellement du rapport cyclique $\alpha$ du signal de commande $PWM_\alpha$. En conséquence, le réglage du rapport cyclique $\alpha$ permet d'obtenir trois signaux de sortie U', V', W', présentant une avance de phase $\delta$ conforme à une consigne d'avance de phase demandée. On notera que le fait de régler le rapport cyclique et donc d'avoir un rapport cyclique variable permet d'obtenir une résolution fine de l'avance de phase $\delta$ et donc un pilotage fin de la machine.

La fréquence de coupure de chaque filtre passe-bas 38, 38', 38" est toutefois supérieure à la fréquence des signaux de U, V, W de manière à lisser le signal découpé Ku, Kv, Kw en enlevant les discontinuités. Vues les vitesses de rotation classiques des machines tournantes et la fréquence des signaux capteurs qui en découle (typiquement entre 0 et 600 Hz), on utilise par exemple de façon non limitative une fréquence de coupure de 10 kHz, ce qui permet d'utiliser, par exemple également une fréquence de 130 kHz pour le signal de commande.

Le signal filtré $F_U$, $F_V$, $F_W$ émis par chaque filtre passe-bas 38, 38', 38" est donc une combinaison des signaux capteurs reçus en entrée du circuit mélangeur 32, 32', 32" correspondant dans lequel l'influence de chacun des signaux reçus en entrée du circuit mélangeur 32, 32', 32" correspondant dépend du rapport cyclique du signal de commande $PWM_\alpha$. On obtient ainsi un signal dont la phase est comprise entre les phases des signaux en entrée et réglable par modification du rapport cyclique $\alpha$ du signal de commande $PWM_\alpha$.

Les signaux filtrés $F_U$, $F_V$, $F_W$ sont appliqués respectivement à une première entrée de seconds comparateurs à hystérésis correspondants 40, 40', 40" qui reçoivent chacun sur une seconde entrée la moyenne des signaux capteurs U, V, W déterminée par un circuit moyennant 42 et par un filtre passe-bas 43 du même type que les filtres passe-bas 38, 38', 38" précédemment mentionnés. On s'affranchie grâce à l'utilisation des comparateurs à hystérésis 40, 40', 40" des décalages de tension appelé tension d'offset en anglais générés dans les filtres 38, 38' et 38".

En variante (non illustré), les comparateurs à hystérésis 40, 40', 40" peuvent comparer les signaux filtrés Fu, Fv et Fw deux à deux. Un comparateur à hystérésis reçoit à ce moment sur sa seconde entrée un signal filtré différent de celui qui est appliqué sur la première entrée au lieu de la moyenne des signaux capteurs. Ceci permet une comparaison entre signaux filtrés plus robuste face à des perturbations parasites car l'amplitude entre lesdits signaux est plus grande que dans la première variante.

On obtient ainsi en sortie des comparateurs à hystérésis 40, 40', 40" des signaux tout ou rien U', V', W' correspondant respectivement aux signaux capteurs en entrée U, V, W avec une avance de phase qui dépend du rapport cyclique $\alpha$ du signal de commande $PWM_\alpha$.

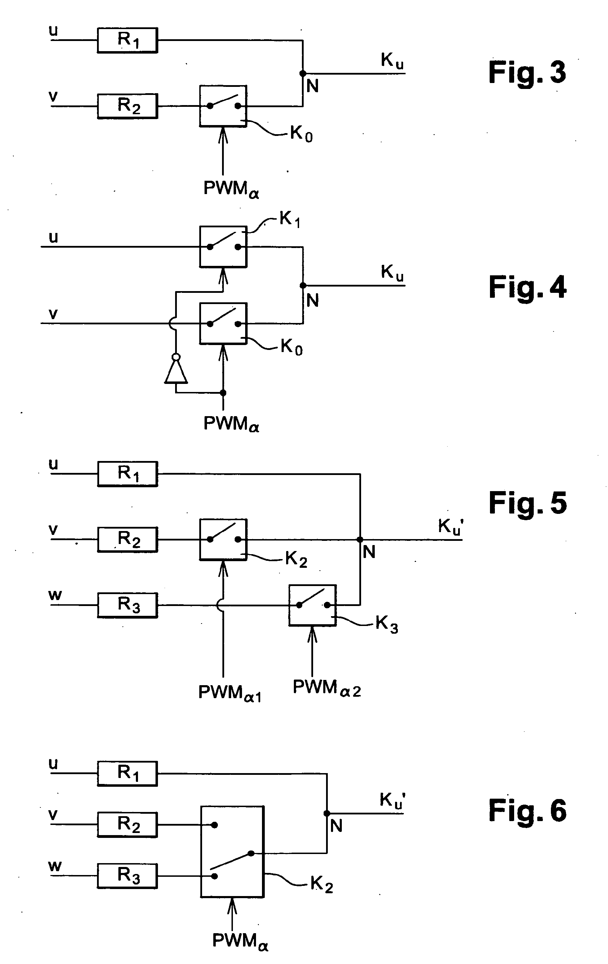

La figure 3 représente un premier exemple non limitatif envisageable pour la mise en oeuvre de chacun des circuits mélangeurs 32, 32', 32" décrits ci-dessus. Cet exemple est écrit comme mise en oeuvre du circuit mélangeur 32 (qui reçoit en entrée le signal U et le signal V en avance de phase de 120° par rapport au signal U), mais s'applique à l'identique aux mélangeurs 32', 32" en appliquant respectivement en entrée les signaux V et W, et les signaux W et U.

Dans cet exemple de réalisation, le premier signal (ici le signal U) est appliqué, via une résistance R1, à un noeud N formant la sortie, tandis que le second signal (ici le signal V) est appliqué à ce même noeud N à travers l'association série d'une résistance R2 et d'un interrupteur $K_0$ commuté sur commande du signal de commande $PWM_\alpha$.

On obtient ainsi en sortie (c'est-à-dire au niveau du noeud N précité) un signal $K_U$. Le signal Ku dépend seulement du signal capteur U lors des phases du signal de commande $PWM_\alpha$ qui force l'ouverture de l'interrupteur $K_0$, et dépend à la fois des signaux U et V (pondéré en outre selon les résistances R1 et R2) lors des phases du signal commande $PWM_\alpha$ qui provoquent la fermeture de l'interrupteur $K_0$. Cette solution permet donc d'obtenir après filtrage passe-bas un signal filtré $F_U$ qui vaut :

$$F_U = \frac{R2 + (1-\alpha)R1}{R1 + R2}U + \frac{\alpha R1}{R1 + R2}V$$

On voit ainsi clairement qu'on obtient, pour des valeurs du rapport cyclique $\alpha$ variant entre 0 et 1, un signal en sortie $F_U$ dont la phase varie entre celle du signal U lui-même (lorsque $\alpha$=0) et une phase proche de celle du signal V (lui-même en avance de phase de 120° par rapport au signal U) lorsque $\alpha$=1, en choisissant des valeurs adéquates pour R1 et R2 (plus R1 est grand par rapport à R2, plus l'avance de phase de $F_U$ s'approche de 120° pour $\alpha$=1).

La figure 4 représente un second exemple de réalisation non limitatif pour les circuits mélangeurs 32, 32', 32" de la figure 2.

Comme précédemment, l'exemple décrit s'applique au circuit mélangeur 32 mais s'appliquerait à l'identique au circuit mélangeur 32', 32".

Dans ce second exemple, le signal capteur U est transmis, via un interrupteur $K_1$, à un noeud N formant sortie, tandis que le signal capteur V est transmis, via un interrupteur $K_0$, au noeud N formant sortie.

L'interrupteur $K_0$ est commuté en fonction du signal de commande $PWM_\alpha$ tandis que l'interrupteur $K_1$ reçoit le même signal de commande $PWM_\alpha$ à travers un inverseur de telle sorte que l'interrupteur $K_1$ est commuté à l'inverse de l'interrupteur $K_0$.

Dans les phases où le signal de commande $PWM_\alpha$ provoque l'ouverture de l'interrupteur $K_0$, il provoque ainsi la fermeture de l'interrupteur $K_1$ de telle sorte que le signal de sortie $K_U$ (au noeud N formant sortie) ne dépend que du signal capteur U.

A l'inverse, lorsque le signal de commande $PWM_\alpha$ entraîne la fermeture de l'interrupteur $K_0$, il entraîne également l'ouverture de l'interrupteur $K_1$ de telle sorte que le signal de sortie $K_U$ ne dépend que du signal capteur V.

Cette solution permet d'obtenir pour le signal filtré $F_U$ la valeur suivante

$$F_U = \alpha U + (1-\alpha)V$$

Comme précédemment, en faisant varier le rapport cyclique $\alpha$ entre 0 et 1, on obtient une avance de phase du signal $F_U$ par rapport au signal U variable, entre 0° (pour $\alpha=0$) et cette fois précisément 120° (pour $\alpha=1$).

La figure 5 représente une variante de réalisation d'un circuit mélangeur, selon laquelle le circuit mélangeur reçoit en entrée les trois signaux capteurs U, V, W.

Le signal capteur U est transmis, via une résistance R1, à un noeud N formant sortie.

Le signal capteur V (en avance de phase de 120° par rapport au signal U) est transmis, via l'association série d'une résistance R2 et d'un premier interrupteur $K_2$ commandé par un premier signal de commande $PWM_{\alpha1}$ avec un premier rapport cyclique $\alpha1$, au noeud N formant sortie.

Le signal capteur W est quant à lui transmis au noeud N formant sortie via une association série du même type, à savoir une résistance R3 et un second interrupteur $K_3$ commandé par un deuxième signal de commande $PWM_{\alpha2}$ avec un deuxième rapport cyclique $\alpha2$.

On obtient donc, après filtrage passe-bas comme décrit précédemment, un signal $F_{U'}$ qui s'écrit :

$$F_{U'} = \left[ \alpha1 + \frac{(\alpha2-\alpha1)R2}{R1+R2} + \frac{(1-\alpha2)}{1+\frac{R1}{R2}+\frac{R1}{R3}} \right]U + \left[ (\alpha2-\alpha1)\frac{R1}{R1+R2} + \frac{(1-\alpha2)}{\frac{R2}{R1}+1+\frac{R2}{R3}} \right]V + \left[ \frac{(1-\alpha2)}{\frac{R3}{R1}+\frac{R3}{R2}} \right.$$

L'avance du signal en sortie de phase peut ainsi varier entre 0° et une valeur légèrement inférieure à 240° (en choisissant des valeurs de résistance pour les résistances R1, R2, R3 qui rendent négligeables le signal U sur le noeud de sortie N lorsque l'interrupteur $K_3$ est fermé).

On remarquera que dans cette variante et les modes de réalisation précédents des figures 3 et 4, les commutateurs sont des interrupteurs simples à savoir qu'ils comportent un état passant permettant de transmettre un signal et un état ouvert permettant de stopper une transmission de signal.

La figure 6 représente une autre variante de réalisation d'un circuit mélangeur, selon laquelle le circuit mélangeur reçoit en entrée les trois signaux capteurs U, V, W.

Le signal capteur U est transmis, via une résistance R1, à un noeud N formant sortie.

Le signal capteur V (en avance de phase de 120° par rapport au signal U) est transmis, via l'association série d'une résistance R2 et d'un interrupteur $K_2$ commandé par un signal de commande $PWM_\alpha$, au noeud N formant sortie.

Le signal capteur W est quant à lui transmis au noeud N formant sortie via une association série du même type, à savoir une résistance R3 et le même interrupteur commandé $K_2$ commandé par le même signal de commande $PWM_\alpha$.

On obtient donc, après filtrage passe-bas comme décrit précédemment, un signal $F_{U'}$ qui s'écrit :

$$F_{U'} = \left[\frac{\alpha R2}{R1+R2} + \frac{(1-\alpha)R3}{R1+R3}\right]U + \left[\frac{\alpha R1}{R1+R2}\right]V + \left[\frac{(1-\alpha)R1}{R1+R3}\right]W$$

L'avance du signal en sortie de phase peut ainsi varier entre 0° et une valeur légèrement inférieure à 240° (en choisissant des valeurs de résistance pour les résistances R1, R2, R3 qui rendent négligeables le signal U sur le noeud de sortie N lorsque l'interrupteur $K_3$ est fermé).

On remarquera que dans cette variante, l'interrupteur commandé $K_2$ est biposition à savoir qu'il comporte aux moins deux états passants permettant de transmettre sélectivement un signal parmi plusieurs.

Les exemples qui précèdent ne représentent que des modes possibles de mise en oeuvre de l'invention qui ne s'y limite pas. Par exemple, dans la variante de la figure 6, on peut imaginer utiliser un même signal de commande $PWM_\alpha$ ou encore à la place des deux interrupteurs $K_2$, et $K_3$, utiliser un seul interrupteur avec un pont résistif.

## Revendications

1. Dispositif de pilotage (30) d'une machine électrique tournante polyphasée, ladite machine comprenant un stator, un rotor, et des capteurs, ledit dispositif étant apte à recevoir :

   - au moins un premier signal capteur (V, W, U) représentatif d'une position du rotor par rapport au stator et délivré par un premier capteur (16 ; 18 ; 14), et
   - un second signal capteur représentatif de ladite position et déphasé par rapport au premier signal (V ; W ; U), ledit second signal étant délivré par un second capteur (14 ; 16 ; 18), **caractérisé en ce qu'**il comporte :
   - des moyens (K, R) pour combiner le premier et le second signal capteur (U, V, W) en un signal combiné ($K_U$; $K_V$; $K_W$), **caractérisé en ce que** lesdits moyens comprenant au moins un élément de commutation ($K_0$, $K_1$, $K_2$, $K_3$) piloté avec un rapport cyclique variable, le signal combiné ($K_U$; $K_V$; $K_W$) étant fonction dudit rapport cyclique et permettant de piloter ladite machine.

2. Dispositif de pilotage (30) selon la revendication 1, **caractérisé en ce qu'**il comporte en outre un filtre passe-bas (38 ; 38' ; 38") apte à filtrer le signal combiné ($K_U$; $K_V$; $K_W$).

3. Dispositif de pilotage (30) selon la revendication 2, **caractérisé en ce que** le filtre passe-bas (38 ; 38' ; 38") a une fréquence de coupure inférieure à la fréquence de transmission du premier élément de commutation ($K_0$, $K_1$, $K_2$, $K_3$).

4. Dispositif de pilotage (30) selon la revendication 3, **caractérisé en ce que** ladite fréquence de coupure est comprise entre 1 kHz et 100 kHz.

5. Dispositif de pilotage (30) selon l'une des revendications précédentes, **caractérisé en ce que** les moyens de combinaison (K, R) comprennent en outre des moyens de pondération ($R_1$, $R_2$, $R_3$) des signaux capteurs.

6. Dispositif de pilotage selon la revendication précédente, **caractérisé en ce que** les moyens de pondération ($R_1$, $R_2$, $R_3$) comprennent au moins une résistance ($R_1$, $R_2$, $R_3$) destinée à recevoir en entrée un signal capteur (U, V, W).

7. Dispositif de pilotage selon l'une des revendications précédentes, **caractérisé en ce que** les moyens de combinaison (K, R) comprennent deux éléments de commutation ($K_1$, $K_0$) destiné à recevoir un signal capteur (U, V, W), et un premier élément de commutation ($K_0$) étant destiné à commuter à l'inverse du deuxième élément de commutation ($K_1$).

8. Dispositif de pilotage selon la revendication précédente 7, **caractérisé en ce que** le deuxième élément de commutation ($K_2$, $K_3$) est destiné à être piloté au moyen d'un second rapport cyclique.

9. Dispositif de pilotage selon l'une des revendications précédentes, **caractérisé en ce que** les moyens de combinaison (K, R) sont aptes à combiner un troisième signal capteur (W) avec les premier et second signaux capteurs (U, V).

10. Dispositif de pilotage selon l'une des revendications précédentes, **caractérisé en ce qu'**un élément de commutation est un interrupteur simple ou un interrupteur biposition.

**11.** Dispositif de pilotage selon l'une des revendications précédentes, **caractérisé en ce qu'**il est apte à recevoir en entrée un nombre de signaux capteurs (U,V, W) égal au nombre de phases de la machine.

**12.** Dispositif de pilotage selon l'une des revendications précédentes, **caractérisé en ce qu'**il coopère avec un circuit de commande (20) comportant un microprocesseur (34) apte à commander le rapport cyclique ($\alpha$) d'un élément de commutation ($K_0$, $K_1$, $K_2$, $K_3$).

**13.** Dispositif de pilotage selon la revendication précédente, **caractérisé en ce que** le microprocesseur (34) est apte à déterminer le rapport cyclique ($\alpha$) en fonction d'une information représentative de la vitesse de rotation de la machine.

**14.** Machine électrique tournante polyphasée, **caractérisée en ce qu'**elle comprend un dispositif de pilotage selon l'une des revendications précédentes.

**15.** Alternateur-démarreur, **caractérisé en ce qu'**il comprend un dispositif de pilotage selon l'une des revendications précédentes.

## Claims

**1.** Device (30) for controlling a polyphase rotating electric machine, the said machine comprising a stator, a rotor, and sensors, the said device being able to receive:

- at least a first sensor signal (V, W, U) representative of a position of the rotor with respect to the stator and delivered by a first sensor (16; 18; 14), and
- a second sensor signal representative of the said position and phase-shifted with respect to the first signal (V; W; U), the said second signal being delivered by a second sensor (14; 16; 18), **characterized in that** it comprises:
- means (K, R) for combining the first and the second sensor signal (U, V, W) into a combined signal ($K_u$; $K_v$; $K_w$), **characterized in that** the said means comprise at least one switching element ($K_0$, $K_1$, $K_2$, $K_3$) controlled with a variable duty ratio, the combined signal ($K_u$; $K_v$; $K_w$) being dependent on the said duty ratio and making it possible to control the said machine.

**2.** Control device (30) according to Claim 1, **characterized in that** it furthermore comprises a low-pass filter (38; 38'; 38") able to filter the combined signal ($K_u$; $K_v$; $K_w$).

**3.** Control device (30) according to Claim 2, **characterized in that** the low-pass filter (38; 38'; 38") has a cutoff frequency below the frequency of transmission of the first switching element ($K_0$, $K_1$, $K_2$, $K_3$).

**4.** Control device (30) according to Claim 3, **characterized in that** the said cutoff frequency lies between 1 kHz and 100 kHz.

**5.** Control device (30) according to one of the preceding claims, **characterized in that** the combining means (K, R) furthermore comprise weighting means ($R_1$, $R_2$, $R_3$) for the sensor signals.

**6.** Control device according to the preceding claim, **characterized in that** the weighting means ($R_1$, $R_2$, $R_3$) comprise at least one resistor ($R_1$, $R_2$, $R_3$) intended to receive as input a sensor signal (U, V, W).

**7.** Control device according to one of the preceding claims, **characterized in that** the combining means (K, R) comprise two switching elements ($K_1$, $K_0$) intended to receive a sensor signal (U, V, W) and a first switching element ($K_0$) being intended to switch inversely with respect to the second switching element ($K_1$).

**8.** Control device according to the preceding Claim 7, **characterized in that** the second switching element ($K_2$, $K_3$) is intended to be controlled by means of a second duty ratio.

**9.** Control device according to one of the preceding claims, **characterized in that** the combining means (K, R) are able to combine a third sensor signal (W) with the first and second sensor signals (U, V).

**10.** Control device according to one of the preceding claims, **characterized in that** a switching element is a simple breaker or a biposition breaker.

11. Control device according to one of the preceding claims, **characterized in that** it is able to receive as input a number of sensor signals (U, V, W) equal to the number of phases of the machine.

12. Control device according to one of the preceding claims, **characterized in that** it cooperates with a drive circuit (20) comprising a microprocessor (34) able to drive the duty ratio ($\alpha$) of a switching element ($K_0$, $K_1$, $K_2$, $K_3$).

13. Control device according to the preceding claim, **characterized in that** the microprocessor (34) is able to determine the duty ratio ($\alpha$) as a function of an information item representative of the rotation speed of the machine.

14. Polyphase rotating electric machine, **characterized in that** it comprises a control device according to one of the preceding claims.

15. Alternator-starter, **characterized in that** it comprises a control device according to one of the preceding claims.


**Patentansprüche**

1. Vorrichtung zur Steuerung (30) einer elektrischen Mehrphasen-Rotationsmaschine, wobei die Maschine einen Stator, einen Rotor und Sensoren aufweist, wobei die Vorrichtung geeignet ist Folgendes zu empfangen:

   - mindestens ein erstes Sensorsignal (V, W, U), das für eine Position des Rotors bezüglich des Stators repräsentativ ist und von einem ersten Sensor (16; 18; 14) geliefert wird, und
   - ein zweites Sensorsignal, das für die besagte Position repräsentativ ist und bezüglich des ersten Signals (V, W, U) phasenverschoben ist, wobei das zweite Signal von einem zweiten Sensor (14; 16; 18) geliefert wird,

   **dadurch gekennzeichnet, dass** sie Folgendes aufweist:

   - Mittel (K, R) zum Kombinieren des ersten und des zweiten Sensorsignals (U, V, W) zu einem kombinierten Signal ($K_U$; $K_V$; $K_W$), **dadurch gekennzeichnet, dass** die Mittel mindestens ein Schaltelement ($K_0$, $K_1$, $K_2$, $K_3$) aufweisen, das mit einem variablen Tastverhältnis angesteuert wird, wobei das kombinierte Signal ($K_U$; $K_V$; $K_W$) von diesem Tastverhältnis abhängig ist und ermöglicht, die Maschine zu steuern.

2. Vorrichtung zur Steuerung (30) nach Anspruch 1, **dadurch gekennzeichnet, dass** sie außerdem ein Tiefpassfilter (38; 38'; 38") aufweist, das geeignet ist, das kombinierte Signal ($K_U$; $K_V$; $K_W$) zu filtern.

3. Vorrichtung zur Steuerung (30) nach Anspruch 2, **dadurch gekennzeichnet, dass** das Tiefpassfilter (38; 38'; 38") eine Schnittfrequenz aufweist, die niedriger als die Übertragungsfrequenz des ersten Schaltelements ($K_0$, $K_1$, $K_2$, $K_3$) ist.

4. Vorrichtung zur Steuerung (30) nach Anspruch 3, **dadurch gekennzeichnet, dass** die Schnittfrequenz zwischen 1 kHz und 100 kHz liegt.

5. Vorrichtung zur Steuerung (30) nach einem der vorhergehenden Ansprüche, **dadurch gekennzeichnet, dass** die Kombinationsmittel (K, R) außerdem Mittel zur Gewichtung ($R_1$, $R_2$, $R_3$) der Sensorsignale aufweisen.

6. Vorrichtung zur Steuerung nach dem vorhergehenden Anspruch, **dadurch gekennzeichnet, dass** die Mittel zur Gewichtung ($R_1$, $R_2$, $R_3$) mindestens einen Widerstand ($R_1$, $R_2$, $R_3$) aufweisen, der dazu bestimmt ist, am Eingang ein Sensorsignal (U, V, W) zu empfangen.

7. Vorrichtung zur Steuerung nach einem der vorhergehenden Ansprüche, **dadurch gekennzeichnet, dass** die Kombinationsmittel (K, R) zwei Schaltelemente ($K_1$, $K_0$) aufweisen, die dazu bestimmt sind, ein Sensorsignal (U, V, W) zu empfangen, und wobei ein erstes Schaltelement ($K_0$) dazu bestimmt ist, umgekehrt wie das zweite Schaltelement ($K_1$) zu schalten.

8. Vorrichtung zur Steuerung nach dem vorhergehenden Anspruch 7, **dadurch gekennzeichnet, dass** das zweite Schaltelement ($K_2$, $K_3$) dazu bestimmt ist, mittels eines zweiten Tastverhältnisses angesteuert zu werden.

9. Vorrichtung zur Steuerung nach einem der vorhergehenden Ansprüche, **dadurch gekennzeichnet, dass** die Kombinationsmittel (K, R) geeignet sind, ein drittes Sensorsignal (W) mit dem ersten und dem zweiten Sensorsignal (U, V) zu kombinieren.

10. Vorrichtung zur Steuerung nach einem der vorhergehenden Ansprüche, **dadurch gekennzeichnet, dass** ein Schaltelement ein einfacher Schalter oder ein Zweistellungsschalter ist.

11. Vorrichtung zur Steuerung nach einem der vorhergehenden Ansprüche, **dadurch gekennzeichnet, dass** sie geeignet ist, am Eingang eine Anzahl von Sensorsignalen (U, V, W) zu empfangen, die gleich der Anzahl von Phasen der Maschine ist.

12. Vorrichtung zur Steuerung nach einem der vorhergehenden Ansprüche, **dadurch gekennzeichnet, dass** sie mit einer Steuerschaltung (20) zusammenwirkt, die einen Mikroprozessor (34) aufweist, der geeignet ist, das Tastverhältnis ($\alpha$) eines Schaltelements ($K_0$, $K_1$, $K_2$, $K_3$) zu steuern.

13. Vorrichtung zur Steuerung nach dem vorhergehenden Anspruch, **dadurch gekennzeichnet, dass** der Mikroprozessor (34) geeignet ist, das Tastverhältnis ($\alpha$) in Abhängigkeit von einer Information zu bestimmen, die für die Drehzahl der Maschine repräsentativ ist.

14. Elektrische Mehrphasen-Rotationsmaschine, **dadurch gekennzeichnet, dass** sie eine Vorrichtung zur Steuerung nach einem der vorhergehenden Ansprüche aufweist.

15. Starter-Generator, **dadurch gekennzeichnet, dass** er eine Vorrichtung zur Steuerung nach einem der vorhergehenden Ansprüche aufweist.

**Fig. 1**

**Fig. 2**

**Fig. 3**

**Fig. 4**

**Fig. 5**

**Fig. 6**

**RÉFÉRENCES CITÉES DANS LA DESCRIPTION**

**Documents brevets cités dans la description**

- WO 2004100351 A
- US 4271385 A
- US 5838123 A